# EUROPEAN PATENT APPLICATION

(11) **EP 4 818 220 A1**
(43) Date of publication of application: **07.10.2026**
(21) Application number: 23959763.6
(22) Date of filing: 29.11.2023
(51) Int. Cl.: C08F 283/00, C08J 3/24, C08J 3/28

(54) **LOW-TEMPERATURE THERMOPLASTIC COMPOSITION, LOW-TEMPERATURE THERMOPLASTIC MATERIAL PREPARED THEREFROM, AND USE OF SAME**

(71) Applicant: Klarity Medical & Equipment (GZ) Co., Ltd., Guangzhou, Guangdong 510730 (CN)
(72) Inventor: ZHANG, Zhongqun, Guangzhou, Guangdong 510730 (CN); LIU, Haihong, Guangzhou, Guangdong 510730 (CN); LIN, Caisheng, Guangzhou, Guangdong 510730 (CN); QIU, Xibo, Guangzhou, Guangdong 510730 (CN)
(74) Representative: Lavoix
(86) International application number: PCT/CN2023/134939
(87) International publication number: WO 2025/111840

(57) **Abstract**

The present invention relates to the technical field of medical materials. Disclosed are a low-temperature thermoplastic composition, a low-temperature thermoplastic material prepared therefrom, and the use of same. The low-temperature thermoplastic composition consists of the following components, in parts by mass: 95-100 parts of a polyurethane with a melting point of 50-70°C and 0.1-5 parts of a crosslinking aid, a polyol ingredient in the polyurethane coming from 70%-100% of poly(hexamethylene adipate) diol and 30%-0% of other aliphatic polyester polyols. The low-temperature thermoplastic composition provided by the present invention can form a low-temperature thermoplastic material with a relatively high gel content under irradiation treatment with a relatively low irradiation dose. The relatively low irradiation dose in the irradiation treatment enables the production cost of the product to be remarkably reduced, and avoids the problem of material degradation under high-intensity irradiation. In addition, the material has the characteristics of relatively small shrinkage force, relatively high gel content and high melt strength. Specifically, the low-temperature thermoplastic composition of the present invention can be used for obtaining a low-temperature thermoplastic material with the gel content of more than 20% and the shrinkage force of less than 37 N under an irradiation treatment with the irradiation dose of only 14-15 kGy.

## Description

### FIELD

The present disclosure relates to medical materials, and more specifically, relates to a low-temperature thermoplastic composition, a low-temperature thermoplastic material prepared therefrom, and use of same.

### BACKGROUND

Common low-temperature thermoplastic materials are made of polycaprolactone as the main component with additives added. They are characterized by being able to soften when heated to about 65°C and allowing them to be molded into any shape, and having the rigidity of polyethylene when cooled to normal temperature. Based on this characteristic, the material can be used for accurate positioning of tumor patients during radiotherapy and fixation of limbs or trunk parts during rehabilitation and orthopedics. At present, low-temperature thermoplastic materials have been actually used in the preparation of radiotherapy positioning films products and rehabilitation and orthopedics fields.

When polycaprolactone is used in the fields of radiotherapy positioning, rehabilitation and orthopedics, it must be crosslinked due to its very low melt strength, otherwise, it will break when it is pulled lightly. Polycaprolactone-based low-temperature thermoplastic materials are generally cross-linked by radiation. After cross-linking by radiation, chemical bonds occur between molecular chains to form a three-dimensional network structure. The degree of forming three-dimensional network structure is usually expressed by gel content, which determines the melt strength of low-temperature thermoplastic products after heating to the melting point. However, polycaprolactone-based low-temperature thermoplastic radiotherapy positioning products have a relatively high shrinkage force after molding, which exerts relatively strong pressure on patients and thus causes significant discomfort.

In addition, a high-quality low-temperature thermoplastic material for radiotherapy positioning film should have appropriate melt strength in addition to low shrinkage force. As mentioned earlier, for low-temperature thermoplastic materials, the gel content determines the melt strength of low-temperature thermoplastic products after heating, and for low-temperature thermoplastic materials, the higher the gel content, the greater the melt strength. The gel content is also related to the stretching properties and memory properties of the product. Generally, the higher the gel content, the more uniform the stretching and the better the memory properties are. The product with higher gel content can still be shaped for the second time even after the first shaping failure, while the product with low gel content does not have this property. Clinical practice has proved that generally when the gel content of low-temperature thermoplastic materials is above 20%, their performance basically meets the needs of clinical application. From the perspective of pursuing better performance, a gel content of above 30% is more desirable. In addition, the gel content is positively correlated with the irradiation dose in the irradiation process. The higher the irradiation dose, the higher the gel content usually obtained is. However, the crosslinking and degradation processes of polymer materials coexist in the irradiation process, especially for the easily degradable materials such as low-temperature thermoplastic materials, the irradiation crosslinking dose should be as small as possible. On the one hand, it is to prevent degradation and ensure stable quality during the shelf life; on the other hand, it can reduce the irradiation cost.

Although polycaprolactone has the disadvantages of strong shrinkage and high price, materials containing polycaprolactone are still the mainstream of low-temperature thermoplastic materials due to their incomparable advantages of easy irradiation crosslinking. In the inventor's prior research CN101698743A, it was found that a mixture of polyurethane and polycaprolactone as low-temperature thermoplastic materials can improve their shrinkage performance, and the price of polyurethane is lower than that of polycaprolactone, which is helpful to reduce the cost. However, inventor discovered that that when polycaprolactone was absent in the system, the ideal sol content could not be achieved at the same low cross-linking irradiation dose. In order to achieve better gel content and meet the requirements of clinical stretching uniformity when polycaprolactone was absent, it was often necessary to increase the gel content by increasing the irradiation dose to above 30 KGy, which undoubtedly increased the cost. At the same time, high irradiation dose will also lead to degradation and embrittlement of low-temperature thermoplastic materials in a shorter time, which will affect the long-term storage of products. The inventor analyzed that this is because the molecular structure of polycaprolactone is greatly different from that of polyurethane, resulting in significant differences in their irradiation crosslinking efficiency.

In the related art, there is still a lack of a low-temperature thermoplastic material that can completely replace polycaprolactone and meet the requirements of clinical performance and long-term storage performance.

### SUMMARY

An objective of the present disclosure is to overcome the shortcomings of existing raw materials for preparing polyurethane-based low-temperature thermoplastic materials and provide a new low-temperature thermoplastic composition. The composition can be used to form a low-temperature thermoplastic material with gel content meeting the requirements through irradiation crosslinking at a lower irradiation dose.

Another objective of the present disclosure is to provide a low-temperature thermoplastic material.

Another objective of the present disclosure is to provide a method for preparing the low-temperature thermoplastic material.

Another objective of the present disclosure is to provide a use of the low-temperature thermoplastic material in radiotherapy positioning films and rehabilitation orthopedic products.

The above-mentioned objectives of the present disclosure are achieved by the following technical solutions:

The present disclosure provides a low-temperature thermoplastic composition, which consists of the following components, in parts by mass: 95 parts to 100 parts of polyurethane with a melting point of 50°C to 70°C and 0.1 parts to 5 parts of an irradiation crosslinking auxiliary; and
a polyol ingredient in the polyurethane is derived from 70% to 100% of poly(hexamethylene adipate) diol and 30% to 0% of an other aliphatic polyester polyol.

The inventor found that most of the saturated polyurethanes showed difficulties in radiation crosslinking, probably because of the lack of carbon-carbon double bonds. Unexpectedly, however, polyurethanes made of poly(hexamethylene adipate) diol showed different properties in radiation crosslinking. Without adding polycaprolactone, they could form a low-temperature thermoplastic material with a higher gel content (above 20%) under the irradiation treatment at a relatively lower irradiation dose (below 15 KGy). The lower irradiation dose significantly reduces the product production cost, avoids the problem of material degradation under high-intensity irradiation, improves product stability, ensures the product shelf life, and is more conducive to application in precise radiotherapy for cancer. Moreover, the obtained low-temperature thermoplastic material still has the advantage of significantly lower shrinkage force than polycaprolactone-based radiotherapy films, which can reduce the pressure on patients and improve comfort. This advantage is consistent with the results obtained from the irradiation crosslinking scheme of polyurethane and polycaprolactone in our previous research.

At the same time, the inventor found that if the content of other aliphatic polyester polyol in polyurethane does not exceed 30%, it will not have a significant impact on the properties of polyurethane with poly (hexylene adipate glycol) diol as the main polyol ingredient. However, if the content of other aliphatic polyester polyol is too high, it will be difficult to achieve the ideal gel content at a lower irradiation dose.

Of course, the higher the proportion of poly(hexamethylene adipate) diol in the polyurethane, the easier it is to obtain a low-temperature thermoplastic material with higher gel content at lower irradiation dose. More preferably, the content of other aliphatic polyester polyol in the polyurethane does not exceed 10%.

More preferably, the content of other aliphatic polyester polyol in the polyurethane does not exceed 5%.

More preferably, the content of other aliphatic polyester polyol in the polyurethane does not exceed 3%.

As a further embodiment, the low-temperature thermoplastic composition consists of the following components, in parts by mass: 95 parts to 100 parts of polyurethane with a melting point of 50°C to 70°C and 0.25 parts to 0.5 parts of an irradiation crosslinking auxiliary.

The function of irradiation crosslinking auxiliary is to make low-temperature polyurethane produce better crosslinking effect during irradiation crosslinking, so as to achieve the required gel content. In the present disclosure, the irradiation crosslinking auxiliary can be selected from the irradiation crosslinking auxiliaries commonly used in the field.

As a further embodiment, the irradiation crosslinking auxiliary is one or more of triallyl isocyanurate, trimethylolpropane triacrylate, trimethylolpropane trimethylacrylate, pentaerythritol triacrylate or ethylene di-isomethacrylate.

As a further embodiment, the types of the other aliphatic polyester polyol are not limited. Preferably, the other aliphatic polyester polyol is a linear aliphatic polyester polyol, such as poly(butylene adipate) diol, poly(ethylene adipate) diol, etc.

Polyurethane with a melting point of 50°C to 70°C is also called low-temperature polyurethane. As described in CN101760165A, it is generally prepared from aliphatic polyester diol with a weight average molecular weight of 2000 to 6000 and diisocyanate. The aliphatic polyester diol and diisocyanate used for preparing low-temperature polyurethane are basically not limited. The diisocyanate includes aliphatic diisocyanate, aromatic diisocyanate or a mixture thereof. The diisocyanate can be specifically hexamethylene diisocyanate (HDI), isophorone diisocyanate (IPDI), cyclohexylmethane diisocyanate (HMDI), toluene diisocyanate (TDI), diphenylmethane diisocyanate (MDI) and the like.

The polyurethane with a melting point of 50°C to 70°C used in the present disclosure can be a commercially available product, such as polyurethane hot melt adhesive particles, or it can be self-prepared according to a known method, such as the method described in CN101760165A.

When preparing polyurethane, a diol with a small molecular weight is optionally added as a chain extender. The diol used as the chain extender usually contains 2 to10 carbon atoms. Generally, the amount of the chain extender is not more than 20%, preferably not more than 10%, and more preferably not more than 5% of the total mass of the aliphatic polyester polyol.

In addition, in the process of preparing polyurethane, other auxiliaries such as catalyst, antioxidant, coupling agent, anti-adhesive agent can also be optionally added.

Common anti-adhesive agents include Fischer-Tropsch wax, talcum powder and the like.

The present disclosure provides a low-temperature thermoplastic material, wherein the low-temperature thermoplastic material is formed by subjecting the low-temperature thermoplastic composition to irradiation treatment, and the low-temperature thermoplastic material has a gel content of not less than 20%.

More preferably, the low-temperature thermoplastic material has a gel content of not less than 30%.

More preferably, the low-temperature thermoplastic material has a gel content of not less than 50%.

More preferably, the low-temperature thermoplastic material has a gel content of not less than 35%.

In this field, "gel content" refers to the content of gel substance in the low-temperature thermoplastic material, which reflects the degree of irradiation crosslinking. It can be determined with reference to existing schemes, such as that described in CN112480616A.

Specifically, the gel content of the low-temperature thermoplastic material is measured as follows: weighing a sample with a mass of m₁, putting the sample in a ground-mouth bottle containing 25 mL of toluene, tightly capping the bottle, placing it in a constant-temperature oven at 25°C for swelling for 48 h, and taking it out; then extracting the sample in toluene for 24 h, and finally drying the sample in a vacuum drying oven at 50°C until its mass is constant, and then weighing its mass to obtain a sample with a mass of m₂; and calculating the gel content Vc according to the calculation formula of gel content: Vc = m₂/m₁×100%.

The present disclosure also provides a method for preparing the low-temperature thermoplastic material, which comprises the steps of:
mixing polyurethane with a melting point of 50°C to 70°C and an irradiation crosslinking auxiliary uniformly, performing melt blending and extrusion molding, and then conducting irradiation treatment to obtain the low-temperature thermoplastic material.

The melt blending and extrusion molding comprises: making uniform materials into sheets with required thickness by an extruder.

The specific parameters of melt blending and extrusion can be referred to as follows: the temperature of feeding section is controlled at room temperature to 50°C, the temperature of compression section is controlled at 90°C to 110°C, the temperature of homogenization section is controlled at 100°C to 120°C, and the temperature of head and die section are controlled at 85°C to 90°C. The rotation speed of the screw is preferably 0.3 m/min to 0.4 m/min.

Other plastic molding machines can also be used to make sheets with required thickness.

In this field, the irradiation dose of irradiation crosslinking generally does not exceed 30 KGy. Because the crosslinking and degradation of polymer materials coexist when they are irradiated by high-energy rays, and a higher irradiation dose will bring more serious degradation and reduce the long-term performance of the materials.

More preferably, the irradiation dose does not exceed 20 KGy. In the application, the gel content increases with the increase of irradiation dose. If the irradiation dose is too low, the required gel content cannot be achieved. However, with the increase of irradiation dose, especially when it exceeds 20 KGy, the low-temperature thermoplastic materials are more obviously embrittled in a shorter time. In the present disclosure, when the irradiation dose exceeds 20 KGy, the low-temperature thermoplastic materials are prone to embrittlement within 24 months, resulting in shelf-life performance lower than the general standards in the industry.

More preferably, the irradiation dose is 14 KGy to 15 KGy. The composition of polyurethane with melting point of 50°C to 70°C and irradiation crosslinking auxiliary in this application can already achieve the required gel content when the irradiation dose is 14 KGy to 15 KGy. If a low-temperature thermoplastic material with higher gel content is desired, the irradiation dose can also be appropriately increased within the range where long-term performance is acceptable.

As a further embodiment, the irradiation treatment is performed by using high-energy rays from a linear accelerator or cobalt 60.

The present disclosure further provides a use of the low-temperature thermoplastic material in radiotherapy positioning films and rehabilitation orthopedic products.

Compared with the related art, the present disclosure has the following beneficial effects:

The low-temperature thermoplastic composition provided by the present disclosure can form a low-temperature thermoplastic material with a high gel content under irradiation treatment with a low irradiation dose, and does not need to add polycaprolactone as an ingredient, thereby significantly reducing the production cost of the product, having the characteristics of small shrinkage force, high gel content and high melt strength, avoiding the degradation of the material under high-intensity irradiation, improving the stability of the product, ensuring the shelf life of the product, and being more conducive to use in accurate radiotherapy for cancer. More specifically, the present disclosure uses poly(hexamethylene adipate) diol-based polyurethane as the main raw material component, which enables the product to have a gel content of more than 20% and a shrinkage force of less than 37 N under an irradiation treatment with an irradiation dose of only 14 KGy to 15 KGy. Radiotherapy positioning films and rehabilitation orthopedic products prepared from low-temperature thermoplastic materials can reduce the pressure on patients and improve comfort.

### DETAILED DESCRIPTION

The present disclosure will be further explained in conjunction with specific embodiments, but the embodiments do not limit the present disclosure in any form. Unless otherwise specified, the raw material reagents used in the embodiments of the present disclosure are the raw material reagents that are conventionally purchased.

In the examples, the sources of the involved polyurethane are as follows:
Polyurethane A: poly(1,6-hexamethylene adipate) diol-based polyurethane with a melting point of 60°C. It was purchased from Taiwan Free Radical P.M.Co., Ltd., with the model number H6500N,
Polyurethane B: poly(1,6-butylene adipate) diol-based polyurethane with a melting point of 60°C. It was purchased from Taiwan Free Radical P.M.Co., Ltd., with the model number AH6010N

The following polyurethanes C, D, E, F, G, H, I, J and K were all self-prepared. The preparation process of polyurethanes C, D, E, H, I, J and K was as follows. Aliphatic polyester polyol was weighed and added into a flask, heated to 120°C, melted and stirred, and stirred and dehydrated at constant temperature in vacuum for 0.5 h to 1 h, and then the weighed small-molecular diol chain extender was added and mixed uniformly, then cooled to approximately 90°C, finally, diisocyanate and ultrafine talc powder were added and mixed with high-speed stirring. The viscosity of the initial reaction was not high, and the temperature increased with the continuous progress of the reaction. After being mixed uniformly, the materials were poured into a tray of tetrafluoroethylene and put into a 100°C oven for curing for 3 hours, and finally, cooled, crushed and granulated.

The preparation process of polyurethanes F and G was as follows. Poly(1,6-hexamethylene adipate) diol (PHA, molecular weight 3000) and poly (1,4-butylene adipate) diol (PBA, molecular weight 4000) were weighed and added into a flask, heated to 120°C, and melted and stirred. The subsequent process was the same as the preparation of polyurethanes C, D, E and G.

The melting point measurement of polyurethanes C, D, E, F, G, H, I, J and K were consistent with those recorded in the patent document CN101760165A. It was carried out in accordance with GB/T19466.3-2004 and determined by differential scanning calorimetry (DSC).

Sources of raw materials: poly(1,6-hexamethylene adipate) diol (PHA, molecular weight 3000) was purchased from Shandong Jiaying Chemical Technology Co., Ltd.; poly(1,4-butylene adipate) diol (PBA, molecular weight 4000) was purchased from Xuzhou Yihuiyang New Materials Co., Ltd; poly (ethylene adipate) (HY-4020, molecular weight 4000) was purchased from Shandong Baiqian Chemical Co., Ltd.; diisocyanate: 4,4 MDI and mixed MDI were produced in Bayer AG, Germany; HDI, IPDI, HMDI and TDI were all produced in Wanhua Chemical Group Co., Ltd., Yantai.

Chain extenders, 1,2-propanediol (1,2-PG, molecular weight 76) and 1,4-butanediol (1,4-BG, molecular weight 90.1) were purchased from reagent company. Ultrafine talcum powder (1000 mesh) was commercially available.

Preparation of polyurethane C:
4000 g of poly(1,6-hexamethylene adipate) diol (PHA, molecular weight 3000)
76 g of 1,2-propanediol (1,2-PG, molecular weight 76)
500 g of 4,4-diphenylmethane diisocyanate (4,4 MDI)
1 g of ultrafine talcum powder (1000 mesh)

This formulation was prepared according to the above-mentioned preparation process, and the melting point was measured to be 51°C (DSC).

Preparation of polyurethane D:
4000 g of poly (1,4-butylene adipate) diol (PBA, molecular weight 4000)
90.1 g of 1,4-butanediol (1,4-BG, molecular weight 90.1)
500 g of mixed diphenylmethane diisocyanate (4,4' and 2,4' MDI)
1 g of ultrafine talcum powder (1000 mesh)

This formulation was prepared according to the above-mentioned preparation process, and the melting point was measured to be 54°C (DSC).

Preparation of polyurethane E:
4000 g of poly (ethylene adipate) diol (molecular weight 4000)
90.1 g of 1,4-butanediol (1,4-BG, molecular weight 90.1)
500 g of mixed diphenylmethane diisocyanate (4,4' and 2,4' MDI)
1 g of ultrafine talcum powder (1000 mesh)

This formulation was prepared according to the above-mentioned preparation process, and the melting point was measured to be 55°C (DSC).

Preparation of polyurethane F:
2800 g of poly(1,6-hexamethylene adipate) diol (PHA, molecular weight 3000)
1200 g of poly (1,4-butylene adipate) diol (PBA, molecular weight 4000)
90.1 g of 1,4-butanediol (1,4-BG, molecular weight 90.1)
500 g of mixed diphenylmethane diisocyanate (4,4' and 2,4' MDI)
1 g of ultrafine talcum powder (1000 mesh)

This formulation was prepared according to the above-mentioned preparation process, and the melting point was measured to be 56°C (DSC).

Preparation of polyurethane G:
2600 g of poly(1,6-hexamethylene adipate) diol (PHA, molecular weight 3000)
1400 g of poly (1,4-butylene adipate) diol (PBA, molecular weight 4000)
90.1 g of 1,4-butanediol (1,4-BG molecular weight 90.1)
500g of mixed diphenylmethane diisocyanate (4,4' and 2,4' MDI)
1 g of ultrafine talcum powder (1000 mesh)

This formulation was prepared according to the above-mentioned preparation process, and the melting point was measured to be 56°C (DSC).

Preparation of polyurethane H:
4000 g of poly(1,6-hexamethylene adipate) diol (PHA, molecular weight 3000)
76 g of 1,2-propanediol (1,2-PG, molecular weight 76)
500g of hexamethylene diisocyanate (HDI)
1 g of ultrafine talcum powder (1000 mesh)

This formulation was prepared according to the above-mentioned preparation process, and the melting point was measured to be 57°C (DSC).

Preparation of polyurethane I:
4000 g of poly(1,6-hexamethylene adipate) diol (PHA, molecular weight 3000)
76 g of 1,2-propanediol (1,2-PG, molecular weight 76)
500g of isophorone diisocyanate (IPDI)
1 g of ultrafine talcum powder (1000 mesh)

This formulation was prepared according to the above-mentioned preparation process, and the melting point was measured to be 51°C (DSC).

Preparation of polyurethane J:
4000 g of poly(1,6-hexamethylene adipate) diol (PHA, molecular weight 3000)
76 g of 1,2-propanediol (1,2-PG, molecular weight 76)
500g of cyclohexylmethane diisocyanate (HMDI)
1 g of ultrafine talcum powder (1000 mesh)

This formulation was prepared according to the above-mentioned preparation process, and the melting point was measured to be 53°C (DSC).

Preparation of polyurethane K:
4000 g of poly(1,6-hexamethylene adipate) diol (PHA, molecular weight 3000)
76 g of 1,2-propanediol (1,2-PG, molecular weight 76)
500 g of toluene diisocyanate (TDI)
1 g of ultrafine talcum powder (1000 mesh)

This formulation was prepared according to the above-mentioned preparation process, and the melting point was measured to be 52°C (DSC)

Polycaprolactone: purchased from domestic Hunan Juren Chemical New Materials Technology Co., Ltd., with the model number PCL-6500.

The "gel content" mentioned in the present disclosure refers to the gel content data obtained by measuring the product.

Specifically, the method for determining the gel content of the low-temperature thermoplastic materials prepared in the following examples and comparative examples was as follows: weighing the sample with the mass of m₁, putting the sample in a ground-mouth bottle containing 25 mL of toluene, tightly capping the bottle, placing it in a constant-temperature oven at 25°C for swelling for 48 h, and taking it out, then extracting the sample in toluene for 24 h, and finally drying the sample in a vacuum drying oven at 50°C until its mass was constant, and then weighing its mass to obtain a sample with the mass of m₂, and calculating the gel content Vc according to the calculation formula of gel content: Vc = m₂/m₁×100%.

The "irradiation treatment" mentioned in the present disclosure means that cobalt 60, linear accelerator or other substances that generate high-energy rays were used as radiation sources. The sheets were irradiated by the radiation of the radiation sources. In the following examples and comparative examples, a linear accelerator was used as a radiation source for irradiation.

The melt strength was tested as follows: cutting a small strip of 100×10 mm from a plate with a thickness of 2.4 mm, clamping the two ends of the strip by 2 mm using two clips, and heating the strip in a constant temperature water tank with a water temperature of 70°C for 2 min until the strip was fully softened, then hanging one end of the strip on a shelf, and hanging a weight of 65 g at the other end, and after 5 min, measuring the length of the strip in centimeters (cm). The test was conducted at a room temperature of 24°C.

### Examples 1 to 7 and Comparative Examples 1 to 6

Examples 1-7 and Comparative Examples 1-6 provide a series of low-temperature thermoplastic compositions were provided. The types of the used polyurethanes were listed in Table 1. 1000 g of polyurethane listed in Table 1 and 3.5 g of radiation crosslinking auxiliary triallyl isocyanurate were mixed uniformly, extruded and granulated by a twin-screw extruder, and then extruded into sheets with a thickness of 2.4 mm. According to the irradiation dose listed in Table 1, the sheets were irradiated and crosslinked with cobalt 60 to obtain the low-temperature thermoplastic materials.

In Comparative Example 4, the preparation method was the same as that mentioned above except that 500 g of polyurethane B, 500 g of polycaprolactone and 3.5 g of radiation crosslinking auxiliary triallyl isocyanurate were mixed uniformly.

In Comparative Example 5, the preparation method was the same as that mentioned above except that 1000 g of polycaprolactone and 3.5 g of radiation crosslinking auxiliary triallyl isocyanurate were mixed uniformly.

**Table 1 Relationship between irradiation dose and gel content**

| Example | Type of polyurethane | Irradiation dose KGy | 3-4 | 6-7 | 12-13 | 14-15 | 20-21 | 29-30 |
|---|---|---|---|---|---|---|---|---|
| Example 1 | polyurethane A | Gel content % | 0 | 1.3 | 15.0 | **33.6** | 41.2 | 50.3 |
| | | Melt strength cm | Broken | 319 | 113 | 51.3 | 39 | 19 |
| Comparative example 1 | polyurethane B | Gel content % | 0 | 0 | 0 | 2.4 | 9.6 | **30.5** |
| | | Melt strength cm | Broken | Broken | Broken | 223 | 130 | 56 |
| Example 2 | polyurethane C | Gel | 0 | 1.3 | 9.0 | **32.3** | 39.2 | 48.9 |
| | | content % | | | | | | |
| | | Melt strength cm | Broken | 312 | 131 | 53 | 42 | 20 |
| Comparative example 2 | polyurethane D | Gel content % | 0 | 0 | 0 | 2.3 | 9.5 | 29.8 |
| | | Melt strength cm | Broken | Broken | Broken | 230 | 127 | 56 |
| Comparative example 3 | polyurethane E | Gel content % | 0 | 0 | 0 | 2.5 | 9.7 | 32.1 |
| | | Melt strength cm | Broken | Broken | Broken | 210 | 123 | 53 |
| Example 3 | polyurethane F | Gel content % | 0 | 0 | 6.1 | **21.6** | 29.5 | 37.2 |
| | | Melt strength cm | Broken | Broken | 221 | 78 | 56 | 46 |
| Comparative example 4 | polycaprolactone+polyurethane B | Gel content % | 2.1 | 17.8 | 22.7 | **31.5** | 37.7 | 52.6 |
| | | Melt strength cm | 270 | 89 | 63 | 55 | 46 | 21 |
| Comparative example 5 | polycaprolactone | Gel content % | **31.6** | 50.7 | 61.2 | 65.1 | 71.5 | 88.2 |
| | | Melt strength cm | 53 | 25 | 20 | 22 | 17 | 13 |
| Comparative example 6 | polyurethane G | Gel content % | 0 | 0 | 8.0 | 17 | 20.9 | 39.8 |
| | | Melt strength cm | Broken | Broken | 133 | 98 | 71 | 50 |
| Example 4 | polyurethane H | Gel content % | 0 | 1.2 | 9.1 | **32.5** | 39.2 | 49.4 |
| | | Melt strength cm | Broken | 319 | 130 | 53 | 42 | 19 |
| Example 5 | polyurethane I | Gel content % | 0 | 1.3 | 9.0 | **33.1** | 38.7 | 49.5 |
| | | Melt strength cm | Broken | 315 | 130 | 52 | 44 | 19 |
| Example 6 | polyurethane J | Gel content % | 0 | 1.4 | 9.6 | **31.8** | 40.1 | 49.6 |
| | | Melt strength cm | Broken | 299 | 123 | 54 | 43 | 19 |
| Example 7 | polyurethane K | Gel content % | 0 | 1.3 | 8.8 | **33.0** | 39.7 | 48.6 |
| | | Melt strength cm | Broken | 313 | 139 | 51 | 42 | 20 |

It can be seen from Table 1 that for the low-temperature thermoplastic materials, the higher the irradiation dose, the higher the gel content, and the corresponding higher melt strength.

As shown in Example 1 and Example 3, the gel content of the product can reach more than 20% under the irradiation dose of 14 KGy to 15 KGy for polyurethane with poly(hexamethylene adipate) diol as the main polyol ingredient.

Comparative Example 5 shows that polycaprolactone is more prone to radiation crosslinking than polyurethane, but it has the disadvantage of excessively high shrinkage. Comparative example 4 shows that when polycaprolactone and polyurethane with poly (butylene adipate) diol as polyol ingredient were mixed in 1:1, it is also easy to achieve the required gel content under lower irradiation conditions. However, when the polyol ingredient was replaced by poly(butylene adipate) diol (Comparative Example 1: commercial; Comparative Example 2: self-synthesized, with different diisocyanate from Comparative Example 1) or poly(ethylene adipate) diol (Comparative Example 3), an irradiation dose of 29 KGy to 30 KGy is required to reach a gel content close to that of Example 1 to meet the requirements of application. The comparative examples also indicate that the presence of polycaprolactone is beneficial to the irradiation crosslinking of polyurethane. However, except for polyurethanes with poly(hexamethylene adipate) diol as the main polyol ingredient, other polyurethanes are difficult to achieve high gel content at lower irradiation doses.

Comparative Example 6 shows that when the content of other aliphatic polyester polyols in polyurethane is too high (accounting for 35% of the total polyol), it is difficult to achieve the ideal gel content at a lower irradiation dose, for example, 14 KGy to 15 KGy (according to the experience of the inventor and the results of current research in this field, the gel content of the low-temperature thermoplastic materials must be at least 20% to meet the performance requirements of application).

Examples 4, 5 and 7 show that the radiation crosslinking performance of the low-temperature thermoplastic compositions is not basically affected by the type of the diisocyanate. It can be seen from the Examples that both commercially available polyurethane and self-synthesized polyurethane have similar effects.

### 2. Shrinkage force testing

Examples and comparative examples with similar melt strength (about 50 cm) were selected from Table 2 to test their shrinkage force. Specifically, the low-temperature thermoplastic materials of Examples 1 to 7, Comparative example 1, Comparative example 4 and Comparative example 5 were made into mask-sheet samples with a thickness of 2.4mm and a mesh duty cycle of 36%, and then the shrinkage force testing was conducted. The test results are shown in Table 2.

The method of shrinkage force testing is as follows:
A pressure sensor connected to a computer (equipped with special software) was placed under the head of a plaster model, and then the heated film sample was placed on the face of the plaster model and stretched downwards. After stretching, the film sample was fixed on the base not connected to the pressure sensor, and timing and recording were started. In this way, the shrinkage force of the film sample can be recorded by the computer. The test was conducted at a room temperature of 24°C and a heating water temperature of 70°C. The shrinkage force measured at 24 hours was taken as the standard.

**Table 2 Test results of shrinkage force**

| Material | Shrinkage force (N) | | | | | |
|---|---|---|---|---|---|---|
| | 1 | 2 | 3 | 4 | 5 | Average value |
| Example 1 | 36.97 | 35.31 | 37.41 | 38.20 | 32.56 | 36.09 |
| Example 2 | 37.32 | 33.21 | 38.39 | 37.16 | 35.25 | 36.26 |
| Example 3 | 34.62 | 36.89 | 38.02 | 37.68 | 35.79 | 36.60 |
| Example 4 | 37.55 | 34.92 | 36.01 | 37.93 | 36.49 | 36.58 |
| Example 5 | 35.18 | 37.51 | 38.34 | 36.87 | 34.85 | 36.55 |
| Example 6 | 35.41 | 38.15 | 37.28 | 37.62 | 34.65 | 36.62 |
| Example 7 | 35.53 | 35.78 | 36.21 | 37.05 | 37.49 | 36.41 |
| Comparative example 1 | 34.65 | 35.38 | 37.34 | 38.03 | 37.69 | 36.62 |
| Comparative example 4 | 33.50 | 30.03 | 36.27 | 33.16 | 32.78 | 33.15 |
| Comparative example 5 | 52.66 | 60.60 | 44.56 | 52.77 | 50.88 | 52.17 |

The low-temperature thermoplastic materials prepared by irradiation crosslinking of the low-temperature thermoplastic compositions in Examples 1 to 7 of the present disclosure have low shrinkage force. When used for shaping radiotherapy positioning products, they are not easy to generate strong pressure on patients and have good comfort. Compared with the material of Comparative example 4, there is no significant difference in shrinkage force, but there is no need to add polycaprolactone, thus reducing raw materials and production costs. The shrinkage force of the polycaprolactone-based low-temperature thermoplastic material in Comparative example 5 is obviously too high, while the shrinkage force of the products in Examples 1 to 7 of the present disclosure is reduced by about 30.5%, the shrinkage force is significantly reduced, thus significantly improving comfort.

The gel content of Example 3 is almost the same as that of Comparative example 1, but the irradiation dose required for Comparative example 1 to reach this gel content is twice that of Example 3, which brings a hidden risk to the long-term quality preservation of the product.

### Determination method of degradation embrittlement time

For the low-temperature thermoplastic compositions of Example 1, Example 3, Comparative example 1, Comparative example 4, Comparative example 5, and Comparative example 6, 1000 g of polyurethane and 3.5 g of radiation crosslinking auxiliary triallyl isocyanurate were mixed uniformly according to the corresponding ratio, and extruded and granulated by a twin-screw extruder, and then made into a plurality of sample bars with dimensions of 100×20×0.24 mm (length× width× thickness), respectively. These sample bars were subjected to irradiation crosslinking at irradiation doses of 3 kGy to 4 kGy, 6 kGy to 7 kGy, 12 kGy to 13 kGy, 14 kGy to 15 kGy, 20 kGy to 21 kGy, and 29 kGy to 30 kGy, respectively. Then the irradiated cross-linked sample bars were placed in a room at a temperature of 23°C to 25°C. After 16 months, the two ends of each sample bar were folded in half, and the sample bar was judged as degradation embrittlement if it broke. The statistical time for the onset of embrittlement was calculated as the month before the breakage test. For example, when the breakage was tested on November 28^{th}, 2023, the degradation embrittlement time was October, 2023. The results are shown in Table 3.

**Table 3 Relationship between irradiation dose and embrittlement time**

| | Material | Dose (KGy) | 3-4 | 6-7 | 12-13 | 14-15 | 20-21 | 29-30 |
|---|---|---|---|---|---|---|---|---|
| Example 1 | polyurethane A | Embrittle ment time (month) | 37 | 35 | 31 | 29 | 23 | 18 |
| Comparative example 1 | polyurethane B | | 36 | 35 | 30 | 28 | 23 | 18 |
| Example 3 | polyurethane F | | 37 | 35 | 31 | 29 | 23 | 17 |
| Comparative example 6 | polyurethane G | | 37 | 35 | 30 | 29 | 23 | 18 |
| Comparative example 4 | polycaprolactone+ polyurethane B | | 38 | 36 | 32 | 30 | 25 | 18 |
| Comparative example 5 | polycaprolactone | | 39 | 38 | 33 | 32 | 27 | 21 |

As can be seen from Table 3, compared with polyurethane crosslinked products, polycaprolactone crosslinked products have a better long-term stability.

For polyurethane, the embrittlement performance decreases significantly with the increase of irradiation dose. When the irradiation dose exceeds 20 KGy, the crosslinked products will undergo degradation and brittleness within 23 months, and the shelf life cannot meet the conventionally two-year requirement in the domestic and international low-temperature thermoplastic materials industry. The low-temperature thermoplastic composition using polyurethane with poly(hexamethylene adipate) diol as the main polyol ingredient can achieve the gel content required for application at a lower irradiation dose, so that the performance can meet the clinical needs, and the lower irradiation dose ensures better long-term stability of the materials made therefrom.

The above embodiments of the present disclosure are merely for clearly illustrating the present disclosure, and are not intended to limit an implementation of the present disclosure. For those ordinary skilled in the art, other changes or variations may be made in different forms on the basis of the above-mentioned description. It is unnecessary and impossible to exhaustively list all the embodiments here. Any modification, equivalent substitution and improvement made within the spirit and principle of the present application are deemed to fall into the protection scope of claims of the present disclosure.

## Claims

1. A low-temperature thermoplastic composition, consisting of the following components, in parts by mass: 95 parts to 100 parts of polyurethane with a melting point of 50°C to 70°C and 0.1 parts to 5 parts of an irradiation crosslinking auxiliary; and
a polyol ingredient in the polyurethane is derived from 70% to 100% of poly(hexamethylene adipate) diol and 30% to 0% of an other aliphatic polyester polyol.

2. The low-temperature thermoplastic composition according to claim 1, consisting of the following components, in parts by mass: 95 parts to 100 parts of the polyurethane with a melting point of 50°C to 70°C and 0.25 parts to 0.5 parts of the irradiation crosslinking auxiliary.

3. The low-temperature thermoplastic composition according to claim 1, wherein the irradiation crosslinking auxiliary is one or more of triallyl isocyanurate, trimethylolpropane triacrylate, trimethylolpropane trimethylacrylate, pentaerythritol triacrylate and ethylene di-isomethacrylate.

4. The low-temperature thermoplastic composition according to claim 1, wherein the other aliphatic polyester polyol is linear aliphatic polyester polyol.

5. The low-temperature thermoplastic composition according to claim 4, wherein the other aliphatic polyester polyol is poly(butylene adipate) diol and/or poly(ethylene adipate) diol.

6. The low-temperature thermoplastic composition according to claim 1, wherein a diisocyanate ingredient in the polyurethane is derived from aliphatic diisocyanate and/or aromatic diisocyanate.

7. The low-temperature thermoplastic composition according to claim 6, wherein the diisocyanate is hexamethylene diisocyanate, isophorone diisocyanate, cyclohexylmethane diisocyanate, toluene diisocyanate and/or diphenylmethane diisocyanate.

8. A low-temperature thermoplastic material, wherein the low-temperature thermoplastic material is formed by subjecting the low-temperature thermoplastic composition according to any one of claims 1 to 7 to irradiation treatment, and the low-temperature thermoplastic material has a gel content of not less than 20%.

9. The low-temperature thermoplastic material according to claim 8, wherein the low-temperature thermoplastic material has a gel content of not less than 30%.

10. The low-temperature thermoplastic material according to claim 8, wherein the low-temperature thermoplastic material has a gel content of not higher than 50%.

11. The low-temperature thermoplastic material according to any one of claims 8 to 10, wherein the gel content of the low-temperature thermoplastic material is measured as follows:
weighing a sample with a mass of m1, putting the sample in a ground-mouth bottle containing 25 mL of toluene, tightly capping the bottle, placing it in a constant-temperature oven at 25°C for swelling for 48 h, and taking it out; then extracting the sample in toluene for 24 h, and
finally drying the sample in a vacuum drying oven at 50°C until its mass is constant, and then weighing its mass to obtain a sample with a mass of m2; and calculating the gel content Vc according to the calculation formula of gel content: Vc = m2/m1×100%.

12. A method for preparing the low-temperature thermoplastic material according to any one of claims 8 to 10, comprising the steps of:
mixing polyurethane with a melting point of 50°C to 70°C and an irradiation crosslinking auxiliary uniformly, performing melt blending and extrusion molding, and then conducting irradiation treatment to obtain the low-temperature thermoplastic material.

13. The method for preparing the low-temperature thermoplastic material according to claim 12, wherein the irradiation dose is 14 Gy to 15 Gy.

14. The method for preparing the low-temperature thermoplastic material according to claim 12, wherein the irradiation treatment is performed by using high-energy rays from a linear accelerator or cobalt 60.

15. Use of the low-temperature thermoplastic material according to any one of claims 8 to 11 in radiotherapy positioning films and rehabilitation orthopedic products.
